# EUROPÄISCHE PATENTSCHRIFT

(11) **EP 3 577 661 B1**
(45) Veröffentlichungstag und Bekanntmachung des Hinweises auf die Patenterteilung: **30.03.2022**
(21) Anmeldenummer: 18704145.4
(22) Anmeldetag: 12.01.2018
(51) Int. Cl.: H01B 7/285, H01B 13/22, H01B 7/02, H01B 13/14, H01B 7/29

(54) **KABEL**
CABLE
CÂBLE

(30) Priorität: 31.01.2017 DE 102017201554; 05.05.2017 DE 102017207655
(43) Veröffentlichungstag der Anmeldung: 11.12.2019
(73) Patentinhaber: LEONI Kabel GmbH, 91154 Roth (DE)
(72) Erfinder: DREINER, Michael, 51688 Wipperfürth (DE); MOSEBACH, Jens, 51688 Wipperfürth (DE); WINKELMANN, Holger, 58313 Herdecke (DE)
(74) Vertreter: FDST Patentanwälte
(86) Internationale Anmeldenummer: PCT/EP2018/050744
(87) Internationale Veröffentlichungsnummer: WO 2018/141530

(56) Entgegenhaltungen:
- EP-A1- 2 581 918
- WO-A1-2006/070314
- WO-A2-2011/156659
- US-A- 5 220 133

## Beschreibung

Die Erfindung betrifft ein Kabel.

Kabel, speziell als Industriekabel bezeichnete Kabel, die im industriellen Bereich eingesetzt werden und beispielsweise aggressiven Medien ausgesetzt sind oder hohen Temperaturbelastungen Stand halten sollen, weisen als Außenmantel des Kabels häufig einen Außenmantel aus einem Fluorpolymer auf. Derartige Kabel sind zum Beispiel aus WO2011/156659, EP2681918 sowie WO2006/070314 bekannt.

Bei derartigen Kabeln mit einem Fluorpolymer-Außenmantel ist allerdings eine zuverlässig dichte Verbindung zwischen dem Außenmantel und einem Steckergehäuse schwierig, da zwischen dem Außenmantel und dem Steckergehäuse typischerweise keine stoffflüssige Verbindung durch Anschmelzen hergestellt werden kann. Um eine zuverlässige Abdichtung zwischen dem Außenmantel und dem Steckergehäuse zu erreichen, werden üblicherweise sogenannte Quetschverbindungen verwendet, bei denen das Steckergehäuse auf den Außenmantel aufgequetscht wird bzw. aufgespritzt wird, so dass also eine gewisse plastische Verformung des Außenmantels erfolgt. Um eine zuverlässige Abdichtung und Dichtheit zu erreichen kommt es dabei entscheidend auf eine möglichst runde Ausbildung des Außenmantels an.

Vor diesem Hintergrund liegt der Erfindung die Aufgabe zugrunde, ein Kabel mit einem Fluorpolymer-Außenmantel anzugeben, bei dem eine möglichst hohe Rundheit gewährleistet ist.

Die Aufgabe wird gemäß der Erfindung die im unabhängigen Anspruch 1 definiert ist gelöst. Unter anderem umfasst das erfindungsgemäße Kabel einen Außenmantel aus einem Fluoropolymer und einen Leitungskern, wobei der Leitungskern aus einem oder mehreren Einzelelementen besteht und von einem Innenmantel umgeben ist, welcher in Zwischenräume zwischen den Einzelelementen eindringt und die Zwischenräumen vorzugsweise vollständig ausfüllt.

Diese Ausgestaltung beruht auf der Überlegung, dass die beispielsweise miteinander verseilten strangförmigen Einzelelemente des Leitungskern insgesamt eine unrunde Außenkontur definieren, die sich bei herkömmlichen Kabeln auch noch an der Außenseite des Außenmantels zumindest teilweise erkennen lässt und somit zu einer gewissen Unrundheit beiträgt.

Durch den um den Leitungskern angebrachten Innenmantel, welcher zumindest teilweise auch in die umfangsseitig an der Außenseite des Leitungskerns ausgebildeten Zwischenräumen zwischen den Einzelelementen eindringt und diese vorzugsweise vollständig ausfüllt, wird gewährleistet, dass der Innenmantel eine kreisrunde Geometrie aufweist. Auf diesen runden Innenmantel ist der Fluorpolymer-Außenmantel insbesondere durch Extrusion aufgebracht, um die gewünschte Rundheit zu erzielen.

Soweit vorliegend davon gesprochen wird, dass der Innenmantel in die Zwischenräumen zwischen den Einzelelementen zumindest teilweise eindringt, so wird hierunter verstanden, dass die Innenseite des Innenmantels keine kreisrunde Querschnittsgeometrie aufweist, sondern vielmehr radial nach innen ragende Ausbuchtungen aufweist, die in die Zwischenräumen zwischen den Einzelelementen eindringen und diese vorzugsweise nahezu vollständig oder auch vollständig ausfüllen. Diese Ausbuchtungen weisen typischerweise eine etwa dreieckförmige Geometrie mit konkav gekrümmten Randseiten auf, die unmittelbar an den (runden) Einzelelementen anliegen. Der Innenmantel ist daher allgemein ein massiver Innenmantel, der also nicht als einfacher Schlauch ausgebildet ist.

Grundsätzlich können in den Zwischenräumen, auch als Zwickelbereiche bezeichnet, Füllstränge zur Verbesserung der Rundheit eingebracht sein, vorzugsweise ist auf derartige Füllstränge in den Zwischen- oder Zwickelbereichen verzichtet.

Unter Fluorpolymer-Außenmantel wird allgemein verstanden, dass der Außenmantel aus einem Material besteht, welches zumindest größtenteils ein Fluorpolymer aufweist. Der Anteil des Fluorpolymers liegt dabei vorzugsweise > 50 Gew%, insbesondere > 90 Gew%. Insbesondere besteht der Außenmantel vollständig aus einem Fluorpolymer.

Ein derartiger Fluorpolymer-Außenmantel wird typischerweise durch Extrusion aufgebracht. Hierbei sind sehr hohe Temperaturen erforderlich, die häufig oberhalb von 300° liegen. Speziell werden bei der Extrusion Temperaturen im Bereich von 380° bis 400° erreicht (sogenannte heiße Extrusion).

Alternativ wird der Außenmantel durch eine Bandierung, speziell einer PTFE-Bandierung, vorzugsweise mit anschließender Temperaturbehandlung, insbesondere eine Sinterung, ausgebildet. Die (PTFE-) Bandierung wird bevorzugt bei Temperaturen von >400°C, vorzugsweise auch >500°C versintert.

Diese hohen Temperaturen können allerdings dazu führen, dass es zu einem Ausgasen aus dem Material des Innenmantels kommt. In diesem Fall würden daher beim Aufbringen des Fluorpolymer-Außenmantels Gasblasen entstehen, die aufgrund des aufgebrachten Außenmantels nicht nach außen dringen können, sondern vielmehr von dem Außenmantel eingeschlossen sind. Dies führt unter Umständen zu lokalen Ausbeulungen an der Außenseite des Außenmantels, wodurch die Rundheit wieder gestört werden würde.

Gemäß der Erfindung ist vor diesem Hintergrund zwischen dem Innenmantel und dem Außenmantel eine hitzebeständige Folie angeordnet. Diese Folie hat dabei vorzugsweise zwei Funktionen. Zum einen verhindert sie, dass eventuell auftretende Gasblasen überhaupt nach außen dringen können und zum anderen reduziert sie die Temperaturbelastung für den Innenmantel, so dass ein Ausgasen zumindest weitgehend vermieden wird.

Entsprechend ist die Folie in zweckdienlicher Ausgestaltung als eine dichte Sperrschicht ausgebildet. Die Folie ist allgemein entweder um den Innenmantel schraubenförmig gewickelt angebracht oder längslaufend angeordnet. Vorzugsweise ist sie um den Innenmantel gewickelt. Hierbei ist zwischen zwei in Längsrichtung aufeinanderfolgenden Wicklungsabschnitten jeweils ein Überlapp gebildet, so dass die Folie den Innenmantel dicht umschließt.

Erfindungsgemäß ist die Folie als ein Hitzeschild ausgebildet. Hierzu weist die Folie zumindest eine Metallschicht auf. Durch die Metallschicht wird die Temperaturbelastung für den Innenmantel effektiv reduziert. Gemäß einer ersten Variante ist dabei die Folie als eine Metallfolie ausgebildet.

In bevorzugter Ausgestaltung handelt es sich jedoch bei der Folie um eine metallkaschierte Polymerfolie, die eine Trägerschicht aus einem vorzugsweise hitzebeständigem Polymer aufweist, auf der eine Metallisierung angebracht ist.

Bei der Trägerschicht handelt es sich dabei insbesondere um eine Polyimid-Schicht. Eine derartige metallkaschierte Polyimid-Folie eignet sich in besonders vorteilhafterweise als Hitzeschild.

Sofern vorliegend von Folie gesprochen wird, so wird hierunter verstanden, dass diese eine Dicke von typischerweise 20 µm bis 50 µm oder bis max. einigen 100 µm aufweist.

Sofern vorliegend von einer hitzebeständigen Folie besprochen wird, wird hierunter verstanden, dass die Folie der Temperaturbelastung bei der heißen Extrusion des Fluorpolymer-Außenmantels zumindest während des Aufbringens des Außenmantels bei der Extrusion Stand hält. Hierunter wird verstanden, dass sie ihre Eigenschaften als dichte Sperrschicht und/oder als Hitzeschild beibehält und nicht zerstört wird.

Damit der Innenmantel der verbleibenden Temperaturbelastung Stand hält, besteht der Innenmantel ebenfalls aus einem wärmebeständigen Polymer. Hierunter wird verstanden, dass das verwendete Polymer bis zumindest 100° Celsius und vorzugsweise bis zumindest 150° Celsius wärmebeständig ist. Hierunter wird verstanden, dass ein Erweichungspunkt, eine Schmelztemperatur oder eine Zersetzungstemperatur des Materials des Innenmantels oberhalb vorzugsweise von 150° Celsius liegt.

Zweckdienlicherweise ist hierzu der Innenmantel als Silikon-Innenmantel ausgebildet. Als Material für den Innenmantel ist daher ein Silikon-Polymer verwendet. Unter Silikon-Innenmantel wird dabei verstanden, dass der Innenmantel zum größten Teil aus einem Silikon-Polymer besteht. Insbesondere besteht der Innenmantel aus zumindest 50 Gew%, vorzugsweise aus zumindest 90 Gew% aus einem Silikon-Polymer. Insbesondere besteht der Innenmantel zu 100 % aus einem Silikon-Polymer.

Ein derartiger Aufbau des Kabels mit
- dem Leitungskern mit mehreren beispielsweise miteinander verseilten Einzelelementen,
- dem unmittelbar auf den Leitungskern angebrachten Silikon-Innenmantel,
- der auf diesen unmittelbar angebrachten Folie und
- dem auf diese unmittelbar angebrachten Fluorpolymer-Außenmantel hat sich als besonders günstig für die Ausbildung des Kabels mit hoher Rundheit gezeigt.

Für den Außenmantel wird als Fluorpolymer vorzugsweise eines oder mehrere der folgenden Fluorpolymere ausgewählt:
PFA (Perfluoralkoxy-Polymer),
PTFE (Polytetrafluorethylen),
FEP (Tetrafluorethylen-Hexafluorpropylen-Copolymer),
ETFE (Ethylen-Tetrafluorethylen)
MFA (Perfluoralkoxy-Polymer),

Vorzugsweise wird als Material für den Zwischenmantel ein Compound aus einem der genannten Fluorpolymere, insbesondere aus ETFE mit einem Fluorelastomer verwendet. Durch die Zugabe eines Fluorelastomers wird eine gute (Biege-)Flexibilität erhalten. Der Anteil des Fluorelastomers liegt dabei bevorzugt in einem Bereich von 40 bis 50 Gew%

Zweckdienlicherweise ist weiterhin das Kabel abschließend gebildet durch die Komponenten Leitungskern, Innenmantel, hitzebeständige Folie und Außenmantel, die in dieser angegebenen Reihenfolge aufeinander folgen und sich jeweils konzentrisch umgeben.

Der Leitungskern besteht wiederum vorzugsweise lediglich aus mehreren Adern, die beispielsweise miteinander verseilt sind. Bei Bedarf können gegebenenfalls noch ergänzend Füllstränge vorgesehen sein. Insbesondere ist bei Bedarf ein zentraler Füllstrang vorgesehen, um den die Adern herum verseilt sind. Bei den Adern handelt es sich wahlweise um Signaladern zur Übertragung von Datensignalen und/oder um Versorgungsadern zur elektrischen Leistungsübertragung, also zur Versorgung von elektrischen Komponenten mit elektrischer Energie. Grundsätzlich besteht auch die Möglichkeit, dass neben diesen Adern als weitere Einzelelemente beispielsweise Lichtleitelemente (optische Fasern) oder Schläuche etc. angeordnet sind.

Der Durchmesser derartiger Kabel, speziell für die Verwendung als Industriekabel liegt dabei typischerweise im Bereich von einigen mm bis maximal einigen 10 mm. Beispielsweise beträgt der Außendurchmesser des Außenmantels 2 mm bis 30 mm. Der hier beschriebene Aufbau des Kabels ist jedoch nicht auf derartige Durchmesserbereiche beschränkt.

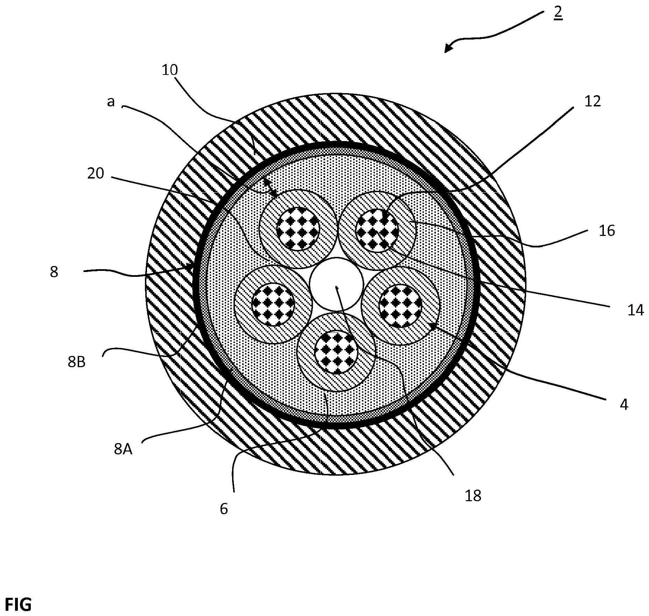

Ein Ausführungsbeispiel der Erfindung wird nachfolgend anhand der einzigen Figur näher erläutert. Diese zeigt einen Querschnitt eines Kabels.

Das in der Figur dargestellte Kabel 2 weist einen Leitungskern 4 auf, welcher unmittelbar von einem Innenmantel 6 umgeben ist. Um den Innenmantel 6 ist eine hitzebeständige Folie 8 angebracht, insbesondere gewickelt. Um diese ist ein Au-ßenmantel 10 aus einem Fluorpolymer angebracht. Dieser ist durch eine sogenannte heiße Extrusion, insbesondere Schlauchextrusion auf den mit der Folie 8 umwickelten Innenmantel 6 aufextrudiert.

Der Leitungskern 4 weist mehrere Einzelelemente 12 auf. Bei diesen handelt es sich insbesondere um Adern, die jeweils gebildet sind durch einen zentralen Leiter 14, insbesondere Litzenleiter sowie eine diesen umgebende Aderisolierung 16. Im Ausführungsbeispiel sind insgesamt 5 als Adern ausgebildete Einzelelemente 12 vorgesehen. Diese sind beispielsweise miteinander verseilt und bilden eine gemeinsame Lage. Im Zentrum ist ein weiterer Strang, beispielsweise ein Füllstrang 18 angeordnet, um den die als Adern ausgebildete Einzelelemente 12 herum verseilt sind.

Aufgrund ihres kreisrunden Querschnitts ist zwischen zwei benachbarten Adern jeweils ein zwickelförmiger Zwischenbereich 20 ausgebildet. Dieser ist zweckdienlicherweise vollständig mit dem Material des Innenmantels 6 ausgefüllt.

Bei dem Innenmantel 6 handelt es sich dabei um einen Silikon-Innenmantel. Als Material für den Innenmantel 6 wird daher ein Silikon-Polymer verwendet. Der Innenmantel besteht zumindest größtenteils aus einem Silikon-Polymer, vorzugsweise besteht der Innenmantel 6 vollständig aus einem Silikon-Polymer.

Wie weiterhin aus der Figur zu erkennen ist, umgibt der Innenmantel den Leitungskern 4 vollständig, so dass also der Außenmantel 10 sowie auch die Folie 8 zu den Einzelelementen 12 einen Mindestabstand a aufweist, welcher erfindungsgemäß zumindest 0,3 mm oder bevorzugt zumindest 0,8 mm beträgt.

Bei der Folie 8 handelt es sich insbesondere um eine metallkaschierte Folie 6, welche eine Trägerschicht 8a speziell aus einem Polyimid und eine darauf aufgebrachte Metallschicht 8b, insbesondere eine Aluminiumschicht aufweist. Die Metallschicht 8b ist dabei insbesondere nach außen in Richtung zum Außenmantel 10 orientiert.

Vorzugsweise wird als Material für den Zwischenmantel ein Compound aus einem der genannten Fluorpolymere, insbesondere aus ETFE mit einem Fluorelastomer verwendet. Durch die Zugabe eines Fluorelastomers wird eine gute (Biege-)Flexibilität erhalten. Dadurch wird insgesamt eine hohe Biegeflexibilität des Kabels 2 erhalten. Als Fluorelastomere werden allgemein fluorierte Elastomere bezeichnet, die auch unter dem Begriff Fluorkautschuk bekannt sind. Als Material für den Zwischenmantel 8 wird beispielsweise das unter dem Handelsnamen Fluon AR-8018A verwendet (Fluon ist eine Marke der Asahi Glass Company, Ltd.).

Der Aussendurchmesser des Kabels 2 und damit des Außenmantels 10 liegt üblicherweise in einem Bereich zwischen 2 mm und 30 mm. Der Außenmantel 10 weist eine Wandstärke auf, die beispielsweise größer ist als der Mindestabstand a. Die Wandstärke des Außenmantels 10 liegt beispielsweise in einem Bereich von 0,3 mm bis 2 mm. Der Mindestabstand a des Innenmantels 6 liegt vorzugsweise im Bereich von 0,3 mm bis 2 mm. Weiterhin weist der Leitungskern 4 einen Durchmesser auf, der durch einen der einzelnen Elemente 12 einhüllenden Kreis bestimmt ist. Dieser Durchmesser liegt dabei vorzugsweise im Bereich von 1 mm bis 30 mm.

Das Kabel 2 zeichnet sich aufgrund seines Aufbaus durch eine hohe Rundheit aus. Durch die Verwendung eines Fluorpolymer-Außenmantels 10 zeigt es darüber hinaus eine gute Hitzebeständigkeit und eine sehr gute Medienbeständigkeit z. B. gegenüber Ölen oder sonstigen Medien. Hierdurch eignet es sich in besonderer Weise zur Verwendung im industriellen Anwendungsbereich als sogenanntes Industriekabel auch in rauen Umgebungsbedingungen.

Bei der Herstellung des Kabels 2 wird zunächst der Innenmantel 6 auf die beispielsweise miteinander vorher verseilten Einzelelemente 12 speziell durch Extrusion aufgebracht. Anschließend wird die Folie 8 um den Innenmantel 6 angebracht, insbesondere gewickelt. Danach erfolgt durch eine Schlauchextrusion das Aufbringen des Fluorpolymer-Außenmantels 10. Dies erfolgt mittels einer sogenannten heißen Extrusion bei Temperaturen typischerweise von 380° Celsius bis 400° Celsius. Alternativ wird zur Ausbildung des Außenmantels 10 eine PTFE-Bandierung angebracht und später bei Temperaturen von >400°C gesintert.

## Patentansprüche

1. Kabel mit einem Außenmantel aus einem Fluorpolymer und mit einem Leitungskern, wobei der Leitungskern mehrere Einzelelementen aufweist, von denen zumindest ein Teil als Adern ausgebildet sind, die jeweils einen zentralen Leiter sowie eine diesen umgebende Aderisolierung aufweisen, und von einem Innenmantel umgeben ist, welcher in Zwischenräume zwischen den Einzelelementen eindringt, wobei zwischen dem Innenmantel und dem Außenmantel eine hitzebeständige Folie angeordnet ist, wobei die Folie als Hitzeschild ausgebildet ist und zumindest eine Metallschicht aufweist und die Folie zu den Einzelelementen einen Mindestabstand von zumindest 0,3 mm aufweist.

2. Kabel nach Anspruch 1, bei dem die Folie als eine dichte Sperrschicht ausgebildet ist.

3. Kabel nach einem der Ansprüche 1 bis 2, bei dem die Folie als eine metallkaschierte Polymerfolie mit einer Trägerschicht aus einem hitzebeständigen Polymer ausgebildet ist.

4. Kabel nach Anspruch 3, bei dem die Trägerschicht aus einem Polyimid besteht.

5. Kabel nach einem der Ansprüche 1 bis 4, bei der die Metallschicht in Richtung zum Außenmantel orientiert ist.

6. Kabel nach einem der Ansprüche 1 bis 5, bei dem der Innenmantel aus einem bis zumindest 100°C, insbesondere bis zumindest 150°C, wärmebeständigen Polymer besteht.

7. Kabel nach einem der Ansprüche 1 bis 6, bei dem der Innenmantel als Silikon-Innenmantel ausgebildet ist.

8. Kabel nach einem der Ansprüche 1 bis 7, bei dem für das Fluorpolymer PFA (Perfluoralkoxy-Polymer), PTFE (Polytetrafluorethylen), FEP (Tetrafluorethylen-Hexafluorpropylen-Copolymer) oder ETFE (Ethylen-Tetrafluorethylen) verwendet ist.

9. Kabel nach Anspruch 8, bei dem für den Zwischenmantel ein Compound aus einem der genannten Flourpolymere und einem Flourelastomer verwendet ist.

10. Kabel nach einem der Ansprüche 1 bis 9, das abschließend gebildet ist durch einen Aufbau mit folgenden Komponenten in unmittelbarer Abfolge:
Leitungskern - Innenmantel- hitzebeständige Folie- Außenmantel.

11. Kabel nach einem der Ansprüche 1 bis 10, bei dem der Leitungskern lediglich aus mehreren elektrischen Adern, bei Bedarf mit einem zentralen Füllstrang, besteht.

12. Kabel nach einem der Ansprüche 1 bis 11, bei dem die Folie als eine metallkaschierte Polymerfolie mit einer Trägerschicht aus einem Polyimid besteht, wobei die Metallschicht in Richtung zum Außenmantel orientiert ist und wobei das Kabel abschließend gebildet ist durch einen Aufbau mit folgenden Komponenten in unmittelbarer Abfolge: Leitungskern - Innenmantel- hitzebeständige Folie- Außenmantel.

## Claims

1. Cable with an outer sheath of a fluoropolymer and with a conductor core,
wherein the conductor core has a plurality of individual elements, at least some of which are in the form of cores, which each have a central conductor and a core insulation surrounding the latter, and is surrounded by an inner sheath, which penetrates into intermediate gaps between the individual elements, wherein a heat-resistant foil is arranged between the inner sheath and the outer sheath, wherein the foil is designed as a heat shield and has at least one metal layer, and the foil has a minimum distance of at least 0.3 mm from the individual elements.

2. Cable according to claim 1, in which the foil is designed as a dense barrier layer.

3. Cable according to one of claims 1 to 2, in which the foil is designed as a metal-clad polymer foil with a carrier layer of a heat-resistant polymer.

4. Cable according to claim 3, in which the carrier layer consists of a polyimide.

5. Cable according to one of claims 1 to 4, in which the metal layer is oriented towards the outer sheath.

6. Cable according to one of claims 1 to 5, in which the inner sheath consists of a polymer, which is heat-resistant up to at least 100° C, in particular up to at least 150° C.

7. Cable according to one of claims 1 to 6, in which the inner sheath is designed as a silicone inner sheath.

8. Cable according to one of claims 1 to 7, in which PFA (perfluoroalkoxy polymer), PTFE (polytetrafluoroethylene), FEP (tetrafluoroethylene-hexafluoropropylene copolymer) or ETFE (ethylene-tetrafluoroethylene) is used for the fluoropolymer.

9. Cable according to claim 8, in which a compound of one of said fluoropolymers and a fluoroelastomer is used for the intermediate jacket.

10. Cable according to one of claims 1 to 9 , which is finally formed by an assembly with the following components in direct sequence: conductor core - inner sheath- heat-resistant foil- outer sheath.

11. Cable according to one of claims 1 to 10 , in which the conductor core consists solely of a plurality of electrical cores, with a central filler strand if required.

12. Cable according to one of claims 1 to 11, in which the foil is a metal-clad polymer foil with a carrier layer of a polyimide, wherein the metal layer is oriented towards the outer sheath, and wherein the cable is finally formed by an assembly with the following components in direct sequence: conductor core - inner sheath - heat-resistant foil - outer sheath.

## Revendications

1. Câble avec une gaine extérieure en un fluoropolymère et avec une âme conductrice, dans lequel l'âme conductrice comprend une pluralité d'éléments individuels, dont au moins une partie est conçue comme des brins, qui comprennent chacun un conducteur central ainsi qu'une isolation de brin entourant celui-ci, et est entourée d'une gaine intérieure, qui pénètre dans des espaces intermédiaires entre les éléments individuels, dans lequel une feuille résistant à la chaleur est disposée entre la gaine intérieure et la gaine extérieure, dans lequel la feuille est conçue comme un bouclier thermique et comprend au moins une couche métallique et la feuille a une distance minimale d'au moins 0,3 mm par rapport aux éléments individuels.

2. Câble selon la revendication 1, dans lequel le film est conçu comme une couche barrière étanche.

3. Câble selon l'une des revendications 1 à 2, dans lequel le film est conçu comme un film polymère à revêtement métallique avec une couche de support en un polymère résistant à la chaleur.

4. Câble selon la revendication 3, dans lequel la couche de support est constituée d'un polyimide.

5. Câble selon l'une des revendications 1 à 4, dans lequel la couche métallique est orientée en direction de la gaine extérieure.

6. Câble selon l'une des revendications 1 à 5, dans lequel la gaine intérieure est constituée d'un polymère résistant à la chaleur jusqu'à au moins 100° C, en particulier jusqu'à au moins 150° C.

7. Câble selon l'une des revendications 1 à 6, dans lequel la gaine intérieure est une gaine intérieure en silicone.

8. Câble selon l'une des revendications 1 à 7, dans lequel pour le fluoropolymère le PFA (polymère perfluoroalcoxy), le PTFE (polytétrafluoroéthylène), le FEP (copolymère tétrafluoroéthylène-hexafluoropropylène) ou l'ETFE (éthylène-tétrafluoroéthylène) est utilisé.

9. Câble selon la revendication 8, dans lequel pour la gaine intermédiaire un composé constitué de l'un desdits fluoropolymères et d'un fluorélastomère est utilisé.

10. Câble selon l'une des revendications 1 à 9, qui est finalement formé par une structure comprenant les composants suivants en succession directe : âme conductrice - gaine intérieure - film résistant à la chaleur - gaine extérieure.

11. Câble selon l'une des revendications 1 à 10, dans lequel l'âme conductrice est uniquement constituée d'une pluralité de conducteurs électriques, si nécessaire avec un brin central de remplissage.

12. Câble selon l'une des revendications 1 à 11, dans lequel le film est constitué d'un film polymère à revêtement métallique avec une couche de support en polyimide, dans lequel la couche métallique est orientée en direction de la gaine extérieure et le câble est finalement formé par une structure avec les composants suivants en succession directe : âme conductrice - gaine intérieure - film résistant à la chaleur - gaine extérieure.
